(19) Europäisches Patentamt
European Patent Office
Office européen des brevets

(11) **EP 3 980 301 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **20730583.0**

(22) Anmeldetag: **27.05.2020**

(51) Internationale Patentklassifikation (IPC):
*B60T 8/172* (2006.01)  *B60T 8/52* (2006.01)
*B60T 13/74* (2006.01)  *B60T 17/18* (2006.01)
*B60T 17/22* (2006.01)  *F16D 49/16* (2006.01)
*F16D 51/18* (2006.01)  *F16D 63/00* (2006.01)
*F16D 65/04* (2006.01)  *F16D 65/08* (2006.01)
*F16D 65/09* (2006.01)  *B60T 1/06* (2006.01)
*B60T 8/171* (2006.01)

(52) Gemeinsame Patentklassifikation (CPC):
**F16D 51/20; B60T 1/067; B60T 8/172; B60T 13/74; B60T 13/741; B60T 17/18; B60T 17/221;** B60T 2270/206; F16D 2066/005

(86) Internationale Anmeldenummer:
**PCT/EP2020/064749**

(87) Internationale Veröffentlichungsnummer:
**WO 2020/245008 (10.12.2020 Gazette 2020/50)**

(54) **VERFAHREN ZUM ERMITTELN EINER BETRIEBSGRÖSSE EINER TROMMELBREMSE UND TROMMELBREMSANORDNUNG**

METHOD FOR DETERMINING AN OPERATING VARIABLE OF A DRUM BRAKE, DRUM BRAKE ASSEMBLY

PROCÉDÉ POUR DÉTERMINER UNE CARACTÉRISTIQUE DE FONCTIONNEMENT D'UN FREIN À TAMBOUR ET ENSEMBLE FREIN À TAMBOUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2019 DE 102019208356**

(43) Veröffentlichungstag der Anmeldung:
**13.04.2022 Patentblatt 2022/15**

(73) Patentinhaber: **Continental Automotive Technologies GmbH**
**30165 Hannover (DE)**

(72) Erfinder: **BÖHM, Jürgen**
**60488 Frankfurt am Main (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
**EP-A1- 0 988 468          EP-A1- 0 994 797**
**EP-A2- 1 095 834          EP-B1- 0 988 468**
**EP-B1- 0 994 797          DE-A1-102005 021 719**
**DE-A1-102008 050 215     DE-A1-102017 217 413**
**JP-A- 2000 033 861**

**Beschreibung**

Die Erfindung betrifft ein Verfahren zum Ermitteln einer Betriebsgröße einer Trommelbremse sowie eine Trommelbremsanordnung zur Ausführung eines solchen Verfahrens.

Trommelbremsen können beispielsweise elektromechanisch betätigt werden und können beispielsweise als Betriebsbremse mit Feststellbremsfunktion betrieben werden. Zur Bestimmung des Bremsmoments auf Basis gemessener Kräfte können beispielsweise Reaktionskräfte der von einer Spreizeinheit aufgebrachten Kräfte, welche sich an einem Abstützlager abstützen, gemessen werden. Ein Beispiel eines solchen Ermittlungsverfahrens ist aus der EP 1 095 834 A2 bekannt.

Es ist eine Aufgabe der Erfindung, ein Verfahren zum Ermitteln einer Betriebsgröße einer Trommelbremse bereitzustellen, welches im Vergleich zu bekannten Ausführungen alternativ oder besser ausgeführt ist. Es ist des Weiteren eine Aufgabe der Erfindung, eine Trommelbremsanordnung zur Ausführung eines solchen Verfahrens bereitzustellen.

Dies wird erfindungsgemäß durch ein Verfahren und eine Trommelbremsanordnung gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Ermitteln einer Betriebsgröße einer Trommelbremse. Die Trommelbremse ist mittels eines elektromechanischen Aktuators betätigbar. Ein solcher Aktuator lässt sich typischerweise entlang eines bestimmten Wegs verfahren. Das Verfahren kann zumindest in einem ersten Raddrehzahlbereich und einem zweiten Raddrehzahlbereich angewandt werden, wobei Raddrehzahlen des ersten Raddrehzahlbereichs größer sind als Raddrehzahlen des zweiten Raddrehzahlbereichs. Typischerweise überlappen sich die Raddrehzahlbereiche dabei nicht oder nur im Rahmen einer Hysterese, wie weiter unten näher beschrieben werden wird.

Das Verfahren weist folgende Schritte auf:

- in dem ersten Raddrehzahlbereich:

    - Ermitteln zumindest einer Lagerkraft einer auflaufenden Bremsbacke und einer weiteren Lagerkraft einer ablaufenden Bremsbacke der Trommelbremse, und
    - Berechnen der Betriebsgröße basierend auf der Lagerkraft und der weiteren Lagerkraft,

- in dem zweiten Raddrehzahlbereich:

    - Ermitteln zumindest einer derzeitigen Aktuatorposition, und
    - Berechnen der Betriebsgröße basierend auf der Aktuatorposition und einer Aktuatorkontaktposition, bei welcher Bremsbacken der Trommelbremse mit einer Trommel der Trommelbremse in Eingriff kommen.

Das erfindungsgemäße Verfahren erlaubt eine vorteilhafte Berechnung einer Betriebsgröße sowohl bei großen Raddrehzahlen wie auch bei kleinen Raddrehzahlen. Bei großen Raddrehzahlen kommt die vorgeschlagene Vorgehensweise gemäß dem ersten Raddrehzahlbereich zur Anwendung, wobei es sich bei großen Raddrehzahlen als vorteilhaft herausgestellt hat, die erwähnten Lagerkräfte zu messen und entsprechend zu verwenden. Bei niedrigen Raddrehzahlen hat es sich herausgestellt, dass diese Vorgehensweise nicht vorteilhaft ist. Dementsprechend wird besser die Aktuatorposition relativ zur Aktuatorkontaktposition verwendet. Dies hat sich als vorteilhaft für geringe Raddrehzahlen herausgestellt.

Die Aktuatorkontaktposition kann beispielsweise bestimmt werden, indem während einer Zuspannbewegung des Aktuators aus dem unbetätigten Zustand heraus die Kraft im Abstützlager gemessen wird. Bei Überschreiten einer vordefinierten Kraftschwelle wird das Anlegen der Bremsbacken an die Trommel festgestellt und die dazugehörige Aktuatorposition wird als Aktuatorkontaktposition festgelegt.

Die Raddrehzahlbereiche können sich auch überlappen, beispielsweise mittels einer Hysterese, so dass insbesondere in einem Übergangsbereich ein häufiges Umschalten zwischen den Raddrehzahlbereichen verhindert wird. Vorzugsweise kann eine Schwelle, bei welcher vom ersten Raddrehzahlbereich zum zweiten Raddrehzahlbereich umgeschaltet wird, niedriger sein als eine Schwelle, bei welcher vom zweiten Raddrehzahlbereich zum ersten Raddrehzahlbereich umgeschaltet wird.

Die Aktuatorposition kann beispielsweise entlang eines Verfahrwegs des Aktuators ermittelt bzw. definiert werden. Die Aktuatorkontaktposition ist dabei diejenige Position, bei welcher die Bremsbacken gerade mit der Trommel in Eingriff kommen. Diese Aktuatorkontaktposition kann sich abhängig von Faktoren wie beispielsweise Verschleiß oder Temperatur ändern.

Die Betriebsgröße kann bei sich drehender Trommel der Trommelbremse beispielsweise ein Bremsmoment sein. Dieses kann vorteilhaft zur Steuerung der Trommelbremse verwendet werden.

In dem ersten Raddrehzahlbereich kann die Betriebsgröße vorteilhaft als Differenz zwischen der Lagerkraft und der weiteren Lagerkraft berechnet werden. Dies ergibt typischerweise ein wirkendes Bremsmoment.

In dem ersten Raddrehzahlbereich kann bei unbekannter Drehrichtung die Betriebsgröße als Differenz zwischen dem größeren Wert von Lagerkraft und weiterer Lagerkraft abzüglich des kleineren Werts von Lagerkraft und weiterer Lagerkraft berechnet werden. Dadurch kann das Verfahren auch in einem Fall angewendet werden, in welchem keine Drehrichtungsinformationen verfügbar sind. Dabei ist dann typischerweise zunächst auch nicht bekannt, welche Bremsbacke auflaufend bzw. ablaufend ist.

In dem zweiten Raddrehzahlbereich kann die Betriebsgröße insbesondere als Produkt eines ersten Multiplikators mit einer Funktion berechnet werden, wobei eine Differenz zwischen Aktuatorposition und Aktuatorkontaktposition eine Eingangsgröße der Funktion ist. Es hat sich gezeigt, dass damit Betriebsgrößen zuverlässig berechnet werden können.

Der erste Multiplikator kann insbesondere als Quotient mit Dividend und Divisor berechnet werden, wobei der Dividend als Mittelwert einer Differenz zwischen Lagerkraft und weiterer Lagerkraft über einen vorbestimmten Zeitraum berechnet werden kann, und wobei der Divisor als Mittelwert der Funktion über einen vorbestimmten Wertebereich berechnet werden kann. Dadurch kann eine Anpassung der Betriebsgrößenberechnung derart vorgenommen werden, dass beim Übergang zwischen erstem Raddrehzahlbereich und zweitem Raddrehzahlbereich kein Sprung in der berechneten Betriebsgröße erfolgt.

Die Funktion kann insbesondere stärker als linear ansteigend sein. Dies gibt typische Betriebssituationen wieder.

Ein Übergang vom ersten Raddrehzahlbereich zum zweiten Raddrehzahlbereich kann insbesondere bei Unterschreiten einer vorgegebenen Raddrehzahlschwelle erfolgen. Die Raddrehzahlschwelle markiert dadurch insbesondere eine Grenze zwischen erstem Raddrehzahlbereich und zweitem Raddrehzahlbereich. Der Übergang kann also beispielsweise beim Abbremsen eines Fahrzeugs aus Fahrt bis zum Stillstand erfolgen.

Bei Abbremsung mittels der Trommelbremse im zugespannten Zustand bis zum Stillstand kann eine Berechnung der Betriebsgröße im Stillstand identisch zur Berechnung im zweiten Raddrehzahlbereich erfolgen. Dadurch kann weiterhin auf die bereits erläuterte Berechnung zurückgegriffen werden. Entsprechend erhaltene Werte haben sich als sinnvoll herausgestellt.

Bei Betätigung der Trommelbremse aus entspanntem Zustand im Stillstand kann die Betriebsgröße im Stillstand als Produkt aus einem zweiten Multiplikator mit dem größeren Wert von Lagerkraft und weiterer Lagerkraft berechnet werden. Dies hat sich als vorteilhafte Berechnungsmethode in dem Fall herausgestellt, in welchem das Fahrzeug nicht mittels der Trommelbremse bis zum Stillstand abgebremst wird, sondern anderweitig zum Stehen kommt und erst dann die Trommelbremse aktiviert wird. In diesem Fall tritt im Gegensatz zum Fall des Abbremsens mittels der Trommelbremse keine Selbsthemmung der Trommelbremse auf, wobei dieser Tatsache durch die veränderte Berechnungsweise Rechnung getragen wird.

Sofern bei den hier beschriebenen Berechnungen vorgegebene Werte verwendet werden kann es sich insbesondere um Werte im Auslegungspunkt der betrachteten Trommelbremse handeln.

Der Betriebsparameter kann im Stillstand insbesondere eine Spannkraft sein. Diese kann vorteilhaft zur Regelung der Trommelbremse verwendet werden, wobei beispielsweise ein Abrollen eines Fahrzeugs an einem Hang verhindert werden kann.

Ein Übergang vom zweiten Raddrehzahlbereich oder vom Stillstand zum ersten Raddrehzahlbereich kann insbesondere bei Überschreiten einer vorgegebenen Raddrehzahlschwelle zuzüglich einer Hysterese erfolgen. Es kann sich dabei insbesondere um die bereits weiter oben genannte Raddrehzahlschwelle handeln, welche den Übergang zwischen erstem Raddrehzahlbereich und zweitem Raddrehzahlbereich markiert. Durch das Vorsehen einer Hysterese kann ein häufiges Umschalten in einem Übergangsbereich verhindert werden.

Die Lagerkraft kann insbesondere an einem Abstützlager für die Bremsbacke gemessen werden. Ebenso kann die weitere Lagerkraft an einem weiteren Abstützlager für die weitere Bremsbacke gemessen werden. Dort treten die relevanten Kräfte unmittelbar auf.

Die Erfindung betrifft des Weiteren eine Trommelbremsanordnung. Die Trommelbremsanordnung weist zumindest eine Bremsbacke und eine weitere Bremsbacke auf. Sie weist zumindest ein Abstützlager für die Bremsbacke und ein weiteres Abstützlager für die weitere Bremsbacke auf. Die Trommelbremsanordnung weist zumindest einen Kraftsensor am Abstützlager zur Messung einer von der Bremsbacke im Abstützlager erzeugten Lagerkraft und zumindest einen weiteren Kraftsensor am weiteren Abstützlager zur Messung einer von der weiteren Bremsbacke im weiteren Abstützlager erzeugten weiteren Lagerkraft auf. Des Weiteren weist die Trommelbremsanordnung eine Auswertevorrichtung auf, welche dazu konfiguriert ist, ein Verfahren gemäß der Erfindung auszuführen. Hierbei kann auf alle hierin beschriebenen Ausführungen und Varianten zurückgegriffen werden.

Mittels der Trommelbremsanordnung können die weiter oben bereits beschriebenen Vorteile erreicht werden. Die Trommelbremsanordnung kann insbesondere zusätzlich einen Aktuator aufweisen, welcher die Bremsbacken betätigen kann.

Die Erfindung betrifft des Weiteren ein nichtflüchtiges computerlesbares Speichermedium, auf welchem Programmcode gespeichert ist, bei dessen Ausführung ein Prozessor ein erfindungsgemäßes Verfahren ausführt. Dabei kann auf alle hierin beschriebenen Ausführungen und Varianten zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigen:

Fig. 1:     einen Ausschnitt aus einer Trommelbremsanordnung,
Fig. 2:     ein Zustandsdiagramm,
Fig. 3:     eine Verarbeitung von Eingangsgrößen zu Ausgangsgrößen, und
Fig. 4:     Funktionsverläufe.

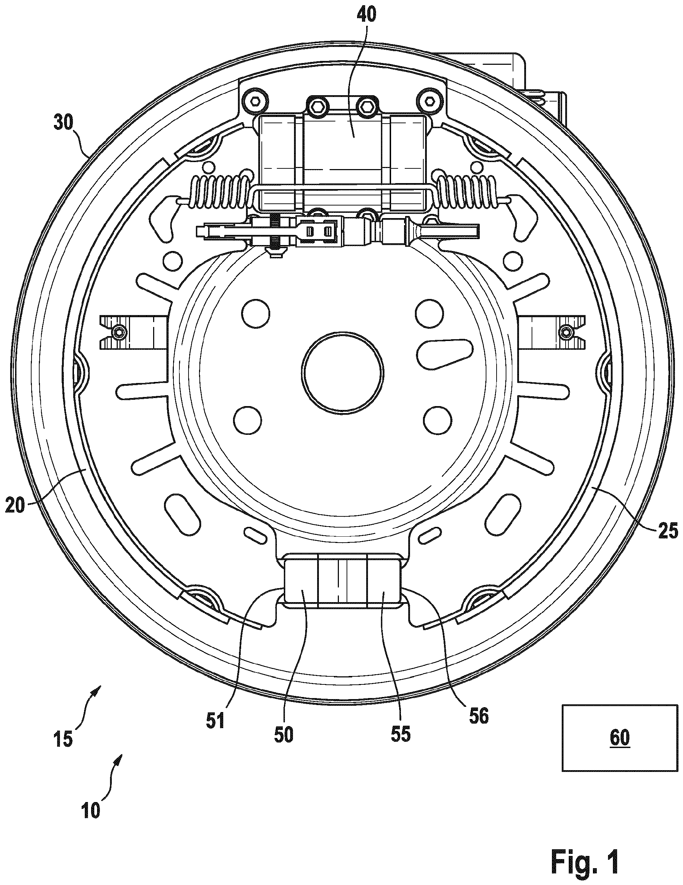

Fig. 1 zeigt schematisch einen Teil einer Trommelbremsanordnung 10 mit einer Trommelbremse 15. Die Trommelbremsanordnung 10 weist eine Bremsbacke 20 und eine weitere Bremsbacke 25 auf. Sie weist eine Bremstrommel 30 auf, wobei die beiden Bremsbacken 20, 25 zur Betätigung der Trommelbremsanordnung 10 gegen die Bremstrommel 30 gedrückt werden können. Hierzu dient ein Aktuator 40. Dieser wird elektrisch betätigt.

Die Trommelbremsanordnung 10 weist ein Abstützlager 50 und ein weiteres Abstützlager 55 auf. Die Bremsbacke 20 stützt sich dabei an dem Abstützlager 50 ab. Die weitere Bremsbacke 25 stützt sich an dem weiteren Abstützlager 55 ab. In dem Abstützlager 50 ist ein Kraftsensor 51 zur Messung einer Lagerkraft angeordnet, mit welcher sich die Bremsbacke 20 im Abstützlager 50 abstützt. In dem weiteren Abstützlager 55 ist ein weiterer Kraftsensor 56 zur Messung einer weiteren Lagerkraft angeordnet, mit welcher sich die weitere Bremsbacke 25 im weiteren Abstützlager 55 abstützt.

Die Trommelbremsanordnung 10 weist ferner eine Auswertevorrichtung 60 auf, welche hier lediglich schematisch dargestellt ist. Diese ist dazu ausgebildet, ein erfindungsgemäßes Verfahren auszuführen. Eine mögliche Ausführung wird nachfolgend beschrieben werden.

Die in den Abstützlagern 50, 55 gemessenen Kräfte, welche Abstützkräfte sind, werden als $F_{Ab,Aufl}$ für die auflaufende Backe und $F_{Ab,Abl}$ für die ablaufende Backe bezeichnet. Diese können bei gleicher Aktuatorposition stark unterschiedliche Werte annehmen. Dies kann es erforderlich machen, eine Umskalierung der Ausgabewerte für eine Kraftrückführung zu implementieren, so dass eine Berücksichtigung eines Betriebszustands der Trommelbremsanordnung 10 nur bei einer Istwertberechnung und nicht bei einer Sollwertberechnung und einer Parametereinstellung eines zum Einsatz kommenden Kraftreglers vorgenommen wird. Ein Bremsmoments $M_{Br}$ kann dabei beispielsweise folgendermaßen berechnet werden:

$$M_{Br} = m_1 * \left( F_{Ab,Aufl} - F_{Ab,Abl} \right) = m_1 * \Delta F$$

Dabei bezeichnen $m_1$ einen vorgebbaren Parameter und $\Delta F$ eine Kraftdifferenz.

Die Kraftdifferenz $\Delta F$ kann beispielsweise als Regelgröße zur Regelung oder Steuerung der Trommelbremse 15 verwendet werden.

Im Fall einer verhältnismäßig hohen Raddrehzahl $\omega_{Rad}$, welche sich in einem ersten Raddrehzahlbereich befindet, welcher alle Raddrehzahlen $\omega_{Rad}$ über einer Schwelle $\varepsilon$ umfasst, kann eine Regelgröße $F_{Ctrl}$ als Betriebsparameter mittels der Kraftdifferenz und den in den Abstützlagern 50, 55 gemessenen Kräften folgendermaßen berechnet werden:

$$F_{Ctrl} = \Delta F = F_{Ab,Aufl} - F_{Ab,Abl}$$

Liegt keine Drehrichtungsinformation für die Raddrehzahl $\omega_{Rad}$ vor, kann die Zuordnung der beiden in den Abstützlagern 50, 55 gemessenen Kräfte $F_{Ab,S1}$ und $F_{Ab,S2}$, welche verallgemeinerte Formen der Kräfte sind für den Fall, dass auflaufende und ablaufende Bremsbacke noch nicht identifiziert sind, über eine Maximalwert- bzw. Minimalwertbestimmung vorgenommen werden. Es gilt dann:

$$F_{Ctrl} = \Delta F = Max\{F_{Ab,S1}, F_{Ab,S2}\} - Min\{F_{Ab,S1}, F_{Ab,S2}\}$$

Im Übergangsbereich zu besonders kleinen Raddrehzahlen $\omega_{Rad}$, welche unterhalb des bereits erwähnten Schwellenwerts $\varepsilon$ liegen, ist der Verlauf der Kräfte nicht klar definiert, da hier dynamische Ausgleichsvorgänge stattfinden. Je nachdem, wie stark die Abbremsung ist, kann es zu einem kurzzeitigen Umkehren der Momente kommen. Nach Beendigung dieses Ausgleichsvorgangs gilt dann näherungsweise $F_{Ab,Aufl} \approx F_{Ab,Abl}$. Bezüglich der Berechnung des Betriebsparameters wird in diesem Übergangsbereich daher ein aus einer Kennlinie berechnetes Kraftsignal folgendermaßen ermittelt:

$$F_{Ctrl} = K_1 * f\left(X_{Sp} - X_0\right)$$

Dabei bezeichnen $K_1$ einen ersten Multiplikator, f eine Funktion, $X_{Sp}$ eine aktuelle Aktuatorposition und $X_0$ eine Aktuatorkontaktposition, bei welcher die Bremsbacken 20, 25 mit ihren jeweiligen Belägen gerade an der Bremstrommel 30 anliegen. Damit bei konstanter Kraftvorgabe eine Umschaltung zwischen den Raddrehzahlbereichen ohne Sprünge erfolgen kann, wird bevorzugt die genutzte Kraft-/Weg-Kennlinie bzw. Funktion f vor dem Umschalten mittels der Ermittlung des ersten Multiplikators $K_1$ als Skalierungsparameter aktualisiert. Eine Basis für diesen Zusammenhang ist beispielsweise eine Kennlinie, die im Stand im momentenfreien Zustand gemessen wurde. Für den bevorzugt bei kleinen Raddrehzahlen zu bestimmendem Skalierungsfaktor bzw. ersten Multiplikator $K_1$ gilt vorliegend:

$$K_1 = Mittelwert\left\{\Delta F\right\} / Mittelwert\left\{f\left(X_{Sp} - X_0\right)\right\}$$

Dadurch wird eine weitgehend oder vollständig sprungfreie Berechnung des Betriebsparameters ermöglicht. Die dabei enthaltene Kraftdifferenz wird dabei typischerweise über einen vorgegebenen Zeitraum, beispielsweise vor der jeweiligen Berechnung, berechnet. Die Funktion f wird typischerweise über einen vorgegebenen Wertebereich von $X_{Sp}$ berechnet.

Für den Fall des Stillstands, also $\omega_{Rad}=0$, wird unterschieden, ob die Betätigung der Trommelbremsanordnung 10 nach einer Abbremsung durch die Trommelbremsanordnung 10 erfolgt oder ob das Fahrzeug unabhängig davon zum Stillstand gekommen ist.

Im ersten Fall, in welchem das Fahrzeug mittels der Trommelbremsanordnung 10 abgebremst wurde, wird die Berechnung zur Vermeidung der Behandlung von Sonderfällen weiterhin kraftgesteuert vorgenommen und daher als Betriebsparameter bzw. Regelgröße weiterhin das aus einer Kennlinie bzw. Funktion berechnete Signal bestimmt:

$$F_{Ctrl} = K_1 * f\left(X_{Sp} - X_0\right)$$

Erfolgt im Stillstand die Betätigung der Trommelbremsanordnung 10 aus einem zuvor entspannten Zustand, dann wird als Rückführsignal wegen $F_{Ab,Aufl} \approx F_{Ab,Abl}$ der größere der beiden Kraftwerte bestimmt:

$$F_{Ctrl} = K_2 * Max\left\{F_{Ab,S1}, F_{Ab,S2}\right\}$$

Dabei wird ein zweiter Multiplikator $K_2$ so definiert, dass für den Fall eines Stillstands und einer momentenfreien Betätigung eine erreichbare Maximalabstützkraft im Auslegungspunkt näherungsweise der maximalen Differenzkraft im Auslegungspunkt entspricht.

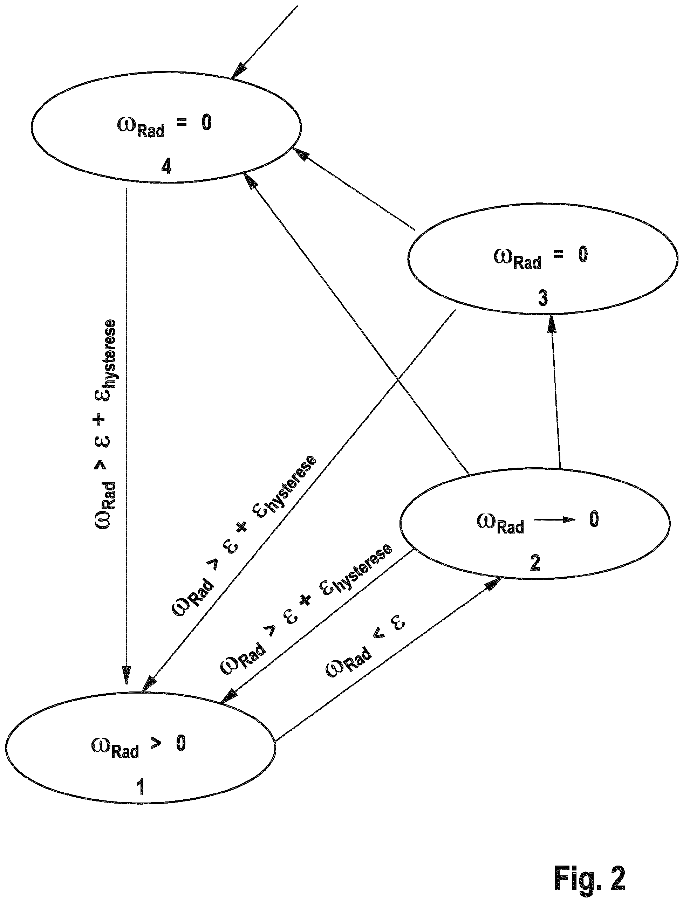

Fig. 2 zeigt ein Zustandsdiagramm, in welchem die vier bereits erwähnten Zustände dargestellt sind.

Zustand 1 ist der Fall, in welchem die Raddrehzahl $\omega_{Rad}$ in einem typischen normalen Betriebsbereich während des Fahrens ist, sich die Raddrehzahl $\omega_{Rad}$ also im ersten Raddrehzahlbereich befindet. In diesem Fall kann eine Berechnung des Betriebsparameters basierend auf einer Differenz zwischen auflaufender Kraft und ablaufender Kraft vorgenommen werden.

Unterschreitet die Raddrehzahl $\omega_{Rad}$ den Schwellenwert $\varepsilon$, so tritt Zustand 2 ein. Eine Rückkehr in Zustand 1 ist nur dann vorgesehen, wenn die Raddrehzahl den Schwellenwert $\varepsilon$ zuzüglich einer Hysterese $\varepsilon_{Hysterese}$ überschreitet. Damit wird ein ständiges Hinund Herwechseln von Zuständen und in den Zuständen hinterlegten Berechnungsmethoden in einem Übergangsbereich vermieden.

In dem Zustand 2, welcher dem zweiten Raddrehzahlbereich entspricht, wird eine Berechnung wie oben beschrieben basierend auf der Funktion f und der Aktuatorposition $X_{Sp}$ sowie der Aktuatorkontaktposition $X_0$ vorgenommen.

Sind die Bremskräfte $F_{Ab,Aufl}$ und $F_{Ab,Abl}$ ungefähr gleich oder ist, in der vorliegenden Implementierung, eine vorgegebene Übergangszeit abgelaufen, so geht die Verfahrensführung zum Zustand 3 über. In diesem Fall wird davon ausgegangen, dass die Raddrehzahl $\omega_{Rad}$ gleich null ist, das Fahrzeug also steht. Die Berechnung wird in diesem Fall, in welchem das Fahrzeug mittels der Trommelbremsanordnung 10 abgebremst wurde, jedoch nicht geändert.

Das Vorsehen von Zustand 3 eröffnet in einer Weiterbildung die Möglichkeit, in diesem Zustand wieder die Kräfte zur Bestimmung der Betriebsgröße zu verwenden. Dazu kann vorzugsweise auch hier ein weiterer anpassbarer Skalierungsfaktor vorgesehen werden, der ein Umschalten ohne Signalsprünge sicherstellt. Ansonsten kann, wie hier beschrieben, die Berechnung entsprechend Zustand 2 durchgeführt werden.

Zustand 4 enspricht einem Fall, in welchem das Fahrzeug unabhängig von der Trommelbremsanordnung 10 zum Stillstand kommt, beispielsweise also einfach ausrollt, und die Trommelbremsanordnung 10 dann erst betätigt wird. In diesem Fall gelten andere Kräfteverhältnisse, da die Selbsthemmung der Trommelbremse 15 nicht wirkt. Die Berechnung des Betriebsparameters erfolgt in diesem Fall wie oben bereits beschrieben basierend auf der größeren der beiden gemessenen Kräfte.

Der Zustand 4 ist im Übrigen auch direkt vom Zustand 2 aus erreichbar, wenn das Fahrzeug entsprechend zum Stillstand kommt.

Wie gezeigt, wird grundsätzlich der Zustand 1 eingenommen, wenn die Raddrehzahl $\omega_{Rad}$ den Schwellenwert $\varepsilon$ zuzüglich einer vorgebbaren Hysterese $\varepsilon_{Hysterese}$ überschreitet.

Durch den gezeigten Ablauf bzw. die gezeigten Zustände kann sichergestellt werden, dass ein Betriebsparameter der Trommelbremsanordnung 10 immer mit der bestmöglichen verfügbaren Berechnungsmethode berechnet wird.

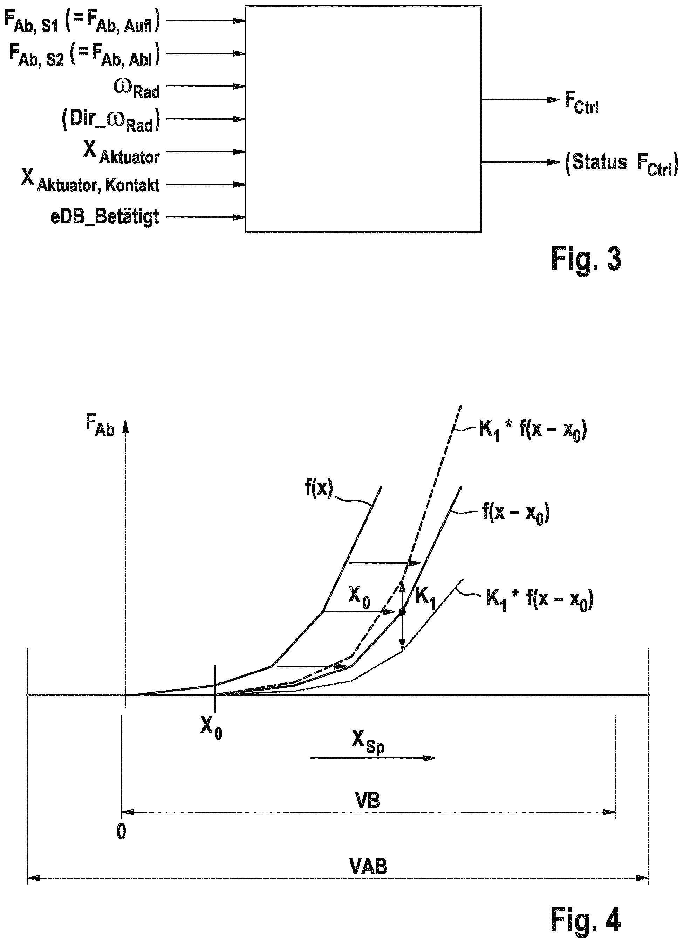

Fig. 3 zeigt schematisch eine mögliche Berechnung von Ausgangsgrößen aus Eingangsgrößen. Als Eingangsgrößen dienen dabei die bereits erwähnten Kräfte $F_{Ab,Aufl}$ bzw. $F_{Ab,Abl}$, welche im Fall einer unbekannten Drehrichtung auch als $F_{Ab,S1}$ und $F_{Ab,S2}$ bezeichnet werden können Des Weiteren dienen als Eingangsgrößen die Raddrehzahl $\omega_{Rad}$, die Richtung (Dir_$\omega_{Rad}$), die Aktuatorposition $X_{Aktuator}$ bzw. $X_{Sp}$, die Aktuatorkontaktposition $X_{Aktuator, Kontakt}$ bzw. $X_0$ sowie die Information eDB_Betätigt, welche angibt, ob die Trommelbremsanordnung 10 zurzeit betätigt wird. Aus der Berechnung gehen insbesondere der bereits erwähnte Betriebsparameter $F_{Ctrl}$ sowie ein zugehöriger Status hervor.

Fig. 4 zeigt einen typischen Verlauf der Funktion f, welche weiter oben bereits beschrieben wurde. Auf der horizontalen Achse ist dabei der verfügbare Verfahrbereich bzw. Arbeitsbereich des Aktuators 40 dargestellt. Der gesamte verfügbare Arbeitsbereich ist dabei mit dem Doppelpfeil VAB bezeichnet. Der tatsächlich nutzbare Verfahrbereich ab dem eingezeichneten Nullpunkt wird als VB bezeichnet.

Eingezeichnet sind zum einen die Funktion f(X) in ihrer ursprünglichen Form, welche durch Verschiebung um den Betrag der Aktuatorkontaktposition $X_0$ nach rechts zur Funktion f (X-$X_0$) wird. Ausgehend von diesem Funktionsverlauf kann die Funktion nach oben oder unten skaliert werden, und zwar durch den ersten Multiplikator $K_1$, wobei in Fig. 4 zwei Funktionsverläufe mit unterschiedlichen Werten von $K_1$ dargestellt sind. Dadurch kann die Funktion f entsprechend angepasst werden. Wie gezeigt steigt die Funktion f stärker als linear an, was sich für typische Anwendungen als praktikabel und passend herausgestellt hat.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Bezugszeichenliste

10: Trommelbremsanordnung
15: Trommelbremse
20: Bremsbacke
25: weitere Bremsbacke
30: Bremstrommel
40: Aktuator
50: Abstützlager
51: Kraftsensor
55: weiteres Abstützlager
56: weiterer Kraftsensor
60: Auswertevorrichtung

**Patentansprüche**

1. Verfahren zum Ermitteln einer Betriebsgröße einer Trommelbremse (15), welche mittels eines elektromechanischen Aktuators (40) betätigbar ist, in zumindest einem ersten Raddrehzahlbereich und einem zweiten Raddrehzahlbereich, wobei Raddrehzahlen ($\omega_{rad}$) des ersten Raddrehzahlbereichs größer sind als Raddrehzahlen ($\omega_{rad}$) des zweiten Raddrehzahlbereichs, wobei das Verfahren folgende Schritte aufweist:

- in dem ersten Raddrehzahlbereich:

  - Ermitteln zumindest einer Lagerkraft ($F_{Ab,Aufl}$) einer auflaufenden Bremsbacke (20, 25) und einer weiteren Lagerkraft ($F_{Ab,Abl}$) einer ablaufenden Bremsbacke (20, 25) der Trommelbremse (15), und
  - Berechnen der Betriebsgröße basierend auf der Lagerkraft ($F_{Ab,Aufl}$) und der weiteren Lagerkraft ($F_{Ab,Abl}$),

- in dem zweiten Raddrehzahlbereich:

  - Ermitteln zumindest einer derzeitigen Aktuatorposition ($X_{Sp}$), und
  - Berechnen der Betriebsgröße basierend auf der Aktuatorposition ($X_{Sp}$) und einer Aktuatorkontaktposition ($X_0$), bei welcher Bremsbacken (20, 25) der Trommelbremse (15) mit einer Trommel (30) der Trommelbremse (15) in Eingriff kommen.

2. Verfahren nach Anspruch 1,

   - wobei die Betriebsgröße bei sich drehender Trommel (30) der Trommelbremse (15) ein Bremsmoment ist.

3. Verfahren nach einem der vorhergehenden Ansprüche,

   - wobei in dem ersten Raddrehzahlbereich die Betriebsgröße als Differenz zwischen der Lagerkraft ($F_{Ab,Aufl}$) und der weiteren Lagerkraft ($F_{Ab,Abl}$) berechnet wird.

4. Verfahren nach einem der vorhergehenden Ansprüche,

   - wobei in dem ersten Raddrehzahlbereich bei unbekannter Drehrichtung die Betriebsgröße als Differenz zwischen dem größeren Wert von Lagerkraft ($F_{Ab,S1}$) und weiterer Lagerkraft ($F_{Ab,S2}$) abzüglich dem kleineren Wert von Lagerkraft ($F_{AB,S1}$) und weiterer Lagerkraft ($F_{Ab,S2}$) berechnet wird.

5. Verfahren nach einem der vorhergehenden Ansprüche,

   - wobei in dem zweiten Raddrehzahlbereich die Betriebsgröße als Produkt eines ersten Multiplikators (K1) mit einer Funktion (f) berechnet wird, wobei eine Differenz zwischen Aktuatorposition ($X_{Sp}$) und Aktuatorkontaktposition ($X_0$) eine Eingangsgröße der Funktion (f) ist.

6. Verfahren nach Anspruch 5,

   - wobei der erste Multiplikator (K1) als Quotient mit Dividend und Divisor berechnet wird,

   - wobei der Dividend als Mittelwert einer Differenz zwischen Lagerkraft ($F_{Ab,Aufl}$) und weiterer Lagerkraft ($F_{Ab,Abl}$) über einen vorbestimmten Zeitraum berechnet wird,
   - wobei der Divisor als Mittelwert der Funktion (f) über einen vorbestimmten Wertebereich berechnet wird.

7. Verfahren nach einem der Ansprüche 5 oder 6,

   - wobei die Funktion (f) stärker als linear ansteigend ist.

8. Verfahren nach einem der vorhergehenden Ansprüche,

   - wobei ein Übergang vom ersten Raddrehzahlbereich zum zweiten Raddrehzahlbereich bei Unterschreiten einer vorgegebenen Raddrehzahlschwelle ($\varepsilon$) erfolgt.

9. Verfahren nach einem der vorhergehenden Ansprüche,

   - wobei bei Abbremsung mittels der Trommelbremse (15) im zugespannten Zustand bis zum Stillstand eine Berechnung der Betriebsgröße im Stillstand identisch zur Berechnung im zweiten Raddrehzahlbereich erfolgt.

10. Verfahren nach einem der vorhergehenden Ansprüche,

- wobei bei Betätigung der Trommelbremse (15) aus entspanntem Zustand im Stillstand die Betriebsgröße im Stillstand als Produkt aus einem zweiten Multiplikator (K2) mit dem größeren Wert von Lagerkraft ($F_{Ab,S1}$) und weiterer Lagerkraft ($F_{Ab,S2}$) berechnet wird.

11. Verfahren nach Anspruch 10,

   - wobei der zweite Multiplikator (K2) als Quotient aus einer maximal erreichbaren momentenfreien Spannkraft geteilt durch eine maximale Lagerkraftdifferenz berechnet wird.

12. Verfahren nach einem der Ansprüche 9 bis 11,

   - wobei der Betriebsparameter im Stillstand eine Spannkraft ist.

13. Verfahren nach einem der vorhergehenden Ansprüche,

   - wobei ein Übergang vom zweiten Raddrehzahlbereich oder vom Stillstand zum ersten Raddrehzahlbereich bei Überschreiten einer vorgegebenen Raddrehzahlschwelle ($\varepsilon$) zuzüglich einer Hysterese ($\varepsilon_{hysterese}$) erfolgt.

14. Verfahren nach einem der vorhergehenden Ansprüche,

   - wobei die Lagerkraft ($F_{Ab,Aufl}$) an einem Abstützlager (50) für die Bremsbacke (20) gemessen wird, und/oder
   - wobei die weitere Lagerkraft ($F_{Ab,Abl}$) an einem weiteren Abstützlager (55) für eine weitere Bremsbacke (25) gemessen wird.

15. Trommelbremsanordnung (10), aufweisend

   - zumindest eine Bremsbacke (20) und eine weitere Bremsbacke (25),
   - zumindest ein Abstützlager (50) für die Bremsbacke (20) und ein weiteres Abstützlager (55) für die weitere Bremsbacke (25),
   - zumindest einen Kraftsensor (51) am Abstützlager (50) zur Messung einer von der Bremsbacke (20) im Abstützlager (50) erzeugten Lagerkraft ($F_{Ab,Aufl}$) und zumindest einen weiteren Kraftsensor (56) am weiteren Abstützlager (55) zur Messung einer von der weiteren Bremsbacke (25) im weiteren Abstützlager (55) erzeugten weiteren Lagerkraft ($F_{Ab,Abl}$), und
   - eine Auswertevorrichtung (60), welche dazu konfiguriert ist, ein Verfahren nach einem der vorhergehenden Ansprüche auszuführen.

**Claims**

1. Method for determining an operating variable of a drum brake (15), which can be actuated by means of an electromechanical actuator (40), in at least one first wheel speed range and one second wheel speed range, wherein wheel speeds ($\omega_{rad}$) of the first wheel speed range are higher than wheel speeds ($\omega_{rad}$) of the second wheel speed range, wherein the method has the following steps:

   - in the first wheel speed range:

     - determining at least one bearing force ($F_{Ab,Aufl}$) of a leading brake shoe (20, 25) and a further bearing force ($F_{Ab,Abl}$) of a trailing brake shoe (20, 25) of the drum brake (15), and
     - calculating the operating variable based on the bearing force ($F_{Ab,Aufl}$) and the further bearing force ($F_{Ab,Abl}$),

   - in the second wheel speed range:

     - determining at least one current actuator position ($X_{Sp}$), and
     - calculating the operating variable based on the actuator position ($X_{Sp}$) and an actuator contact position ($X_0$), in which brake shoes (20, 25) of the drum brake (15) come into engagement with a drum (30) of the drum brake (15).

**2.** Method according to Claim 1,

- wherein the operating variable in the case of a rotating drum (30) of the drum brake (15) is a braking torque.

**3.** Method according to any of the preceding claims,

- wherein, in the first wheel speed range, the operating variable is calculated as the difference between the bearing force ($F_{Ab,Aufl}$) and the further bearing force ($F_{Ab,Abl}$).

**4.** Method according to any of the preceding claims,

- wherein, in the first wheel speed range, if the direction of rotation is unknown, the operating variable is calculated as the difference between the higher of the bearing force ($F_{Ab,S1}$) and the further bearing force ($F_{Ab,S2}$) minus the lower of the bearing force ($F_{Ab,S1}$) and the further bearing force ($F_{Ab,S2}$).

**5.** Method according to any of the preceding claims,

- wherein, in the second wheel speed range, the operating variable is calculated as the product of a first multiplier ($K1$) and a function ($f$), wherein a difference between the actuator position ($X_{Sp}$) and the actuator contact position ($X_0$) is an input variable of the function ($f$).

**6.** Method according to Claim 5,

- wherein the first multiplier ($K1$) is calculated as a quotient with a dividend and a divisor,

- wherein the dividend is calculated as the average of a difference between the bearing force ($F_{Ab,Aufl}$) and the further bearing force ($F_{Ab,Abl}$) over a predetermined period of time,
- wherein the divisor is calculated as the average of the function ($f$) over a predetermined value range.

**7.** Method according to either of Claims 5 and 6,

- wherein the function ($f$) rises more sharply than a linear function.

**8.** Method according to any of the preceding claims,

- wherein a transition from the first wheel speed range to the second wheel speed range takes place when a predetermined wheel speed threshold ($\varepsilon$) is undershot.

**9.** Method according to any of the preceding claims,

- wherein, when braking to a standstill by means of the drum brake (15) in the applied state, calculation of the operating variable at a standstill is performed in a manner identical to calculation in the second wheel speed range.

**10.** Method according to any of the preceding claims,

- wherein, when actuating the drum brake (15) out of the released state at a standstill, the operating variable at a standstill is calculated as the product of a second multiplier ($K2$) and the higher of the bearing force ($F_{Ab,S1}$) and the further bearing force ($F_{Ab,S2}$).

**11.** Method according to Claim 10,

- wherein the second multiplier ($K2$) is calculated as the quotient of a maximum achievable torque-free clamping force divided by a maximum bearing force difference.

**12.** Method according to any of Claims 9 to 11,

- wherein the operating parameter at a standstill is a clamping force.

**13.** Method according to any of the preceding claims,

- wherein a transition from the second wheel speed range or from a standstill to the first wheel speed range takes place when a predetermined wheel speed threshold ($\varepsilon$) plus a hysteresis ($\varepsilon_{hysterese}$) is exceeded.

**14.** Method according to any of the preceding claims,

- wherein the bearing force ($F_{Ab,Aufl}$) is measured at a supporting bearing (50) for the brake shoe (20), and/or
- wherein the further bearing force ($F_{Ab,Abl}$) is measured at a further supporting bearing (55) for a further brake shoe (25).

**15.** Drum brake assembly (10), having

- at least one brake shoe (20) and one further brake shoe (25),
- at least one supporting bearing (50) for the brake shoe (20) and one further supporting bearing (55) for the further brake shoe (25),
- at least one force sensor (51) at the supporting bearing (50) for the purpose of measuring a bearing force ($F_{Ab,Aufl}$) produced in the supporting bearing (50) by the brake shoe (20), and at least one further force sensor (56) at the further supporting bearing (55) for the purpose of measuring a further bearing force ($F_{Ab,Abl}$) produced in the further supporting bearing (55) by the further brake shoe (25), and
- an evaluation device (60), which is configured to execute a method according to any one of the preceding claims.

**Revendications**

**1.** Procédé pour déterminer une grandeur de fonctionnement d'un frein à tambour (15) qui peut être actionné au moyen d'un actionneur électromécanique (40), dans au moins une première plage de vitesses de rotation de roue et une deuxième plage de vitesses de rotation de roue, les vitesses de rotation de roue ($\omega_{roue}$) de la première plage de vitesses de rotation de roue étant supérieures aux vitesses de rotation de roue ($\omega_{roue}$) de la deuxième plage de vitesses de rotation de roue, le procédé présentant les étapes consistant à :

- dans la première plage de vitesses de rotation de roue,

  - déterminer au moins une force de palier ($F_{Ab,Aufl}$) d'une mâchoire de frein montante (20, 25) et une autre force de palier ($F_{Ab,Abl}$) d'une mâchoire de frein descendante (20, 25) du frein à tambour (15), et
  - calculer la grandeur de fonctionnement sur la base de la force de palier ($F_{Ab,Aufl}$) et de l'autre force de palier ($F_{Ab,Abl}$),

- dans la deuxième plage de vitesses de rotation de roue :

  - déterminer au moins une position actuelle de l'actionneur ($X_{Sp}$), et
  - calculer la grandeur de fonctionnement sur la base de la position de l'actionneur ($X_{Sp}$) et d'une position de contact de l'actionneur ($X_0$) à laquelle les mâchoires de frein (20, 25) du frein à tambour (15) entrent en prise avec un tambour (30) du frein à tambour (15).

**2.** Procédé selon la revendication 1,

- dans lequel la grandeur de fonctionnement est un couple de freinage lorsque le tambour (30) du frein à tambour (15) tourne.

**3.** Procédé selon l'une quelconque des revendications précédentes,

- dans lequel, dans la première plage de vitesses de rotation de roue, la grandeur de fonctionnement est calculée en tant que différence entre la force de palier ($F_{Ab,Aufl}$) et l'autre force de palier ($F_{Ab,Abl}$).

**4.** Procédé selon l'une quelconque des revendications précédentes,

- dans lequel, dans la première plage de vitesses de rotation de roue, lorsque la direction de rotation est inconnue, la grandeur de fonctionnement est calculée en tant que différence entre la plus grande valeur parmi la force de palier ($F_{Ab,S1}$) et l'autre force de palier ($F_{Ab,S2}$), moins la plus petite valeur parmi la force de palier ($F_{Ab,S1}$) et l'autre force de palier ($F_{Ab,S2}$).

**5.** Procédé selon l'une quelconque des revendications précédentes,

- dans lequel, dans la deuxième plage de vitesses de rotation de roue, la grandeur de fonctionnement est calculée en tant que produit d'un premier multiplicateur ($K1$) par une fonction ($f$), une différence entre la position de l'actionneur ($X_{Sp}$) et la position de contact de l'actionneur ($X_0$) étant une grandeur d'entrée de la fonction ($f$).

**6.** Procédé selon la revendication 5,

- dans lequel le premier multiplicateur ($K1$) est calculé en tant que quotient avec un dividende et un diviseur,

  - le dividende étant calculé en tant que valeur moyenne d'une différence entre la force de palier ($F_{Ab,Aufl}$) et l'autre force de palier ($F_{Ab,Abl}$) sur une période de temps prédéterminée,
  - le diviseur étant calculé en tant que valeur moyenne de la fonction ($f$) sur une plage de valeurs prédéterminée.

**7.** Procédé selon l'une quelconque des revendications 5 ou 6,

- dans lequel la fonction ($f$) est croissante de manière plus forte qu'une fonction linéaire.

**8.** Procédé selon l'une quelconque des revendications précédentes,

- dans lequel une transition de la première plage de vitesses de rotation de roue à la deuxième plage de vitesses de rotation de roue est effectuée lors du passage en dessous d'un seuil de vitesse de rotation de roue prédéfini ($\varepsilon$).

**9.** Procédé selon l'une quelconque des revendications précédentes,

- dans lequel, en cas de freinage au moyen du frein à tambour (15) à l'état serré jusqu'à l'arrêt, un calcul de la grandeur de fonctionnement à l'arrêt est effectué de manière identique au calcul dans la deuxième plage de vitesses de rotation de roue.

**10.** Procédé selon l'une quelconque des revendications précédentes,

- dans lequel, en cas d'actionnement du frein à tambour (15) de l'état desserré à l'arrêt, la grandeur de fonctionnement à l'arrêt est calculée en tant que produit d'un deuxième multiplicateur ($K2$) par la plus grande valeur parmi la force de palier ($F_{Ab,S1}$) et l'autre force de palier ($F_{Ab,S2}$).

**11.** Procédé selon la revendication 10,

- dans lequel le deuxième multiplicateur ($K2$) est calculé en tant que quotient d'une force de serrage maximale sans couple pouvant être atteinte, divisée par une différence maximale de force de palier.

**12.** Procédé selon l'une quelconque des revendications 9 à 11,

- dans lequel le paramètre de fonctionnement à l'arrêt est une force de serrage.

**13.** Procédé selon l'une quelconque des revendications précédentes,

- dans lequel une transition de la deuxième plage de vitesses de rotation de roue ou de l'arrêt à la première plage de vitesses de rotation de roue est effectuée lors d'un dépassement d'un seuil de vitesse de rotation de roue prédéfini ($\varepsilon$) plus une hystérésis ($\varepsilon_{hystérésis}$).

**14.** Procédé selon l'une quelconque des revendications précédentes,

- dans lequel la force de palier ($F_{Ab,Aufl}$) est mesurée sur un palier d'appui (50) pour la mâchoire de frein (20), et/ou
- dans lequel l'autre force de palier ($F_{Ab,Abl}$) est mesurée sur un autre palier d'appui (55) pour une autre mâchoire de frein (25).

15. Agencement de frein à tambour (10), présentant

- au moins une mâchoire de frein (20) et une autre mâchoire de frein (25),
- au moins un palier d'appui (50) pour la mâchoire de frein (20) et un autre palier d'appui (55) pour l'autre mâchoire de frein (25),
- au moins un capteur de force (51) sur le palier d'appui (50) pour mesurer une force de palier ($F_{Ab,Aufl}$) générée par la mâchoire de frein (20) dans le palier d'appui (50) et au moins un autre capteur de force (56) sur l'autre palier d'appui (55) pour mesurer une autre force de palier ($F_{Ab,Abl}$) générée par l'autre mâchoire de frein (25) dans l'autre palier d'appui (55), et
- un dispositif d'évaluation (60) qui est configuré pour réaliser un procédé selon l'une quelconque des revendications précédentes.

Fig. 1

Fig. 2

$F_{Ab, S1} \left( = F_{Ab, Aufl} \right)$ →

$F_{Ab, S2} \left( = F_{Ab, Abl} \right)$ →

$\omega_{Rad}$ →

$\left( Dir\_\omega_{Rad} \right)$ →

$X_{Aktuator}$ →

$X_{Aktuator, Kontakt}$ →

$eDB\_Betätigt$ →

→ $F_{Ctrl}$

→ $\left( Status\ F_{Ctrl} \right)$

## Fig. 3

$F_{Ab}$

$K_1 * f(x - x_0)$

$f(x)$

$f(x - x_0)$

$X_0$  $K_1$

$K_1 * f(x - x_0)$

$X_0$

$X_{Sp}$

VB

0

VAB

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1095834 A2